(19) Europäisches Patentamt

European Patent Office

Office européen des brevets

(11) **EP 2 563 041 A2**

(12) **EUROPEAN PATENT APPLICATION**

(43) Date of publication:
**27.02.2013 Bulletin 2013/09**

(51) Int Cl.:
**H04Q 9/00** *(2006.01)*

(21) Application number: **12179786.4**

(22) Date of filing: **09.08.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.08.2011 GB 201113842**

(71) Applicant: **Dexdyne Limited
Gloucestershire GL7 1US (GB)**

(72) Inventor: **Bolton, Jered Stacey
Cirencester, Gloucestershire GL7 1WE (GB)**

(74) Representative: **Browne, Robin Forsythe et al
Hepworth Browne
Pearl Chambers
22 East Parade
Leeds, Yorkshire LS1 5BY (GB)**

(54) **Apparatus and method for displaying telemetry data**

(57)    Browser-based software uses image tiling techniques to display interactive charts of large scale, time-based datasets. Scalable Vector Graphics instantiated from code loaded in memory (124) associated with a server (150) dynamically generates image tiles (256) at the server (150), which tiles (256) are then selectively called up and downloaded to a client system (106) for display, as shown in FIG. 4. The server operates to consolidate requested data into averaged data points and then renders an overall graphic representation (260) by appropriately assembling the averaged data points into discrete tiles. Mapping-based tiling software at the client system (106) assembles a composite image of a portion of a chart/graph for a user-selected region at a selected resolution within a viewport (254) of predetermined size; this considerably improves graph interaction and reduces rendering times over existing Flash-based solutions. Further, the server (150) is configured to pre-empt selection of any particular area (282) by generating a further sub-layer of tiles that would, upon request, be immediately downloadable to the client system (106).

FIG. 10

**Description**

Field of the Invention

This invention relates, in general, to the manipulation and processing of datasets and is particularly, but not exclusively, applicable to an apparatus for telemetry assessment and a method of processing large-scale, time-based datasets to permit trend analysis in interactive charts. The invention therefore finds particular application in predictive management and remote telemetry systems where data is acquired from sensors (or other inputs).

Summary of the Prior Art

In order to effectively analyse large datasets (especially in the context of investigative diagnostics), it is quite usual to generate graphical representations of the data and to identify trends within generated graphs. By way of example, in telemetry and remote monitoring systems, the graphing of datasets related to multiple variables can be interpreted by an expert to identify a specific cause at the beginning of a trend (or more typically multiple concurrent trends) in, for example, engine operation where one might realistically look at temperature and pressure variations at multiple locations and related output torque for varying running speeds. Effective interaction with the plotted graphical representations of sampled data is therefore important, especially since any future significant change in operation of an engine, for example, can often be traced back (or linked) with multiple but generally subtle trend changes in multiple monitored parameters.

Other applications for trend analysis of large datasets are in the fields of foreign currency exchange (or "FOREX"), commodities brokering and share prices.

Trend analysis, particularly in the context of predictive environments and investigative diagnostics, is increasingly attracting attention. Indeed, in predictive systems and the like, customers are now demanding greater access to higher definition data to permit a proactive approach to system management that mitigates the effects of either: i) probable external events in the context, for example, of financial market trading and market volatility; and ii) maintenance or service downtime in the context of commercial plants and computer systems. For example, telemetry monitoring equipment is configured to record and report over a suitable medium, such as a wireless or wireline-based communication channel, status activity of large remotely located plant equipment, such as power generators and the like. Trend analysis of the sampled data is then used to either predict/anticipate system breakdown or component failure or to better understand consequences brought about by operational changes within the system, thereby permitting optimization of maintenance service resources and/or maximized efficiency/productivity of the plant equipment.

The generated datasets are unsurprisingly vast. For example, if one were to sample raw data at a rate of one sample per minute, trend analysis would typically require a measurement window to span many weeks if not months. Consequently, the dataset (typically plotted as (x,y) value pairs) could quite easily encompass many tens of thousands of individual data points, e.g. for a three month window, 60 sample times 24 hours times 90 day = 129600 separate data points. Such a level of resolution is considered irresolvable.

Web browser-implemented techniques permit graphical representation and interaction with charts, but such current techniques take an unacceptably long time to process large datasets to render the graphs. More specifically, current Flash Based Solutions (FBS) allow users to visualise their data, albeit in a rather restricted way in that FBS employs selectively reduced datasets that give only an illusion of interacting with the larger dataset (whereas in effect they average the data and thus compromise resolution). Processing of the data in FBS is supported locally at the computer where access to stored data (remotely stored in a server-based database) is requested.

Further, FBS data is subset based, with each data subset being non-recovery in the sense that, once a particular sample has been downloaded, it is not possible to toggle/select either to another adjacent frame or to another dataset without having to select and load a new sample realised by a computationally different data subset. In practical terms, this means that a user wishing to zoom into or out of a rendered graph must wait whilst: i) a new data subset is loaded; ii) a previously viewed data subset is potentially re-loaded; and iii) in both cases the sample data is rendered into an entirely new graph (in the sense that the data is again processed from afresh). And, having loaded any dataset, it is not possible to return to the previous zoom level because the graphic representation and the subset data for that previous zoom level has been deleted/wiped from the local computing platform. Similarly, with a graphical representations rendered on a uniquely selected subset of data, it is not possible to pan left or right to explore and easily identify further and extended temporal trends in the data. It is therefore difficult for a user to select the "viewport" (i.e. the fixed size reference frame, window or area) to ensure that they have both sufficient resolution and a sufficient window of time in which to perceive and/or identify one or more relevant trends.

The terms "viewport", "reference frame", "window" or "screen area" (and variations thereof) are used interchangeably and should be considered equivalent unless their use and the surrounding context implies otherwise.

Also, with FBS charting module applications, as the number and size of datasets increases, the chart's responsiveness decreases since the averaging effect of the calculation and rendering processes decrease granularity by precluding finer isolation of particular points along the graph's profile. In other words, adjacent but actually distinct points along the graph are merged into a single value that cannot be resolved without selecting and loading a new data subset.

The loading and re-loading of data therefore takes time from several perspectives, namely: i) the time to select and acquire/download the data subset from the server; ii) any handshaking and security protocols that need to be satisfied between the server and the local computer; and especially iii) the local processing time at the local computer to compute, render and plot the selected graph given potentially tens of thousands of data points.

Delays of several seconds in the rendering of the graphs are therefore not untypical, with the delay suggesting to the user that the local computer's processor has locked-up; this may inappropriately encourage the user to enter additional keystrokes or mouse movement. And such additional keystroke entry or mouse movement is undesirable since it draws additional processing resources and it may affect cursor position which may, in turn, cause an inadvertent selection of a new window parameter and the associated download of another data subset.

The performance of FBS is entirely dependent on the power of the computer on which the FBS process is running. This is because the FBS process requires the client computer to perform a considerable amount of data processing in order to render a chart. Users of budget equipment will therefore meet performance issues a lot sooner than users of high-specification equipment. To mitigate this scenario, the dataset size must be set so as to optimize performance for the lowest common system denominator in order to provide a consistent user experience for the application. Consequently FBS-based systems are unable to fully harness the capabilities of high performance client computers for processing larger datasets.

Furthermore, with using a FBS, nominally "individual" datapoints (although representing an averaged value) are tagged with "pop-ups" that display the nominal value at that point. The generation and display of these pop-ups actually inhibits responsiveness of the computer mouse and thus diminishes selectivity and external control for the user.

Additionally, FBS requires linear x-axis data, with no provision for handling datasets containing irregular intervals. Unfortunately, using an FBS with irregularly spaced data leads to a very misleading representation of the dataset because FBS processes are programmed to assume that data will always be linearly spaced, i.e. without irregular time entries that occur, for example, when the nominal sampling rate changes from once per minute to, say, once per second. Consequently, non-linear data (such as that produced by an alarm event which logs an instantaneous value not bound by the normal logging interval) introduces a skew in the x-axis which has a knock-on effect on all subsequent data points. FBS excludes the appropriate handling of non-linear interval sampling because the additional processing overhead required to interpret, scale and display such non-linear data would result in unacceptably long rendering times.

FBS is therefore deficient in that it is unable to deal with real-life situations where: i) an alarm (in an telemetry measurement system) could cause a time offset to occur, say, twenty seconds into a five minute cycle; and ii) a change in data logging granularity is triggered by an alarm events that causes data (for a variety of selected parameters) to be logged every second (or at least higher granularity) relative to normal data logging regimes. Combining alarm-related data with normally logged data also leads to a large dataset with irregular intervals and the potential for the aforementioned skew in visual representation.

In fact, empirical evidence shows that FBS slows down unacceptably when parsing large datasets with time information. For example, even calculating "zero" data requires processing consideration within an FBS environment, with this slowing down graph rendering and graph responsiveness.

Further, in viewing an FBS-generated graph covering a six-month window of time and a nominal thirty minute sampling rate, data might well be averaged to a one-week window of resolution which provides no meaningful trend analysis. In fact, using an FBS solution means that it is not possible to resolve individual data points without selecting a detailed level, and then this more detailed level provides no overall trend-context and further requires explicit recalculation of all relevant data points.

And in the FBS approach, any time information within the dataset is therefore used merely for labelling purposes.

FBS application charting modules (such as employed at http://www.xe.com/ucc/) become both increasingly unwieldy and difficult to process and render as the dataset increases in size and the responsiveness of the output (and particularly the generation of charts or graphs) is reduced. By way of example, if

Existing FBS charting module application therefore have a user interface that is considered highly granular and non-intuitive in that data precise data points are not easily resolvable within a viewport of the conventional display unit and delays inherently arise from a disjointed processing and presentation of subsets of data points.

Consequently, FBS-based representation is from the outset compromised in telemetry or remote monitoring systems where logged data contains large quantities of time-based information.

Summary of the Invention

According to a first aspect of the invention there is provided a telemetry system comprising: a data acquisition unit for monitoring and reporting measureable parameters within an operating system; memory for storing said measureable, time-varying parameters; and a server arranged or configured to: access the memory to recover a range of the time-varying parameters and to process the range to produce, over time, a plurality of plotted graphical representations that each show variations or trends in the plotted time-varying parameters in different resolvable detail; generate each graphical representation as a structured canvas of image tiles, at least some of each canvas viewable within a viewport having a predetermined size; upon receipt of a first request, to communicate at least some of the image tiles in a first canvas to permit remote structured assembly of that first canvas in the viewport; and upon receipt of a subsequent request, to communicate at least some of the image tiles in a second canvas to permit remote structured assembly of that second canvas in the viewport, wherein the second canvas has a higher resolution than the first canvas and the second canvas has more image tiles than the first canvas.

In one embodiment, the server is arranged or configured such that presentation of a particular canvas with respect to the viewport causes a selected point of interest on the first canvas to appear in the viewport at the same position irrespective of resolution level and irrespective of the number of tiles generated in the second canvas.

In a second aspect of the invention there is provided a method of presenting datapoints and trends in captured, time-varying parameter data rendered as a graphical image on a viewport of a display, the viewport having a fixed size permitting a constrained instantaneous display of the graphical image, the method comprising: monitoring, reporting and storing said measureable time-varying parameters; processing a range of said stored time-varying parameters at a server to produce, on demand, a plurality of plotted graphical representations that each show variations or trends in the plotted time-varying parameters in different resolvable detail, each graphical representation structured as a canvas assembled from rendered image tiles; downloading at least some of the image tiles associated with a first canvas; assembling the image tiles at a browser-based client to reproduce, initially, at least a portion of the first canvas viewable within the viewport; downloading at least some of the image tiles in a second canvas to permit remote structured assembly of that second canvas in the viewport, wherein the second canvas has a higher resolution than the first canvas and the second canvas has more image tiles than the first canvas.

In a further aspect of the invention there is provided a computer readable medium having a computer program recorded thereon, the program arranged to make a computer execute procedure to: process a range of stored time-varying parameters to produce, on demand, a plurality of plotted graphical representations that each show variations or trends in the plotted time-varying parameters in different resolvable detail, each graphical representation structured as a canvas assembled from rendered image tiles, at least one of the plotted graphical representations realised by a multiplicity of image tiles; download at least some image tiles associated with a first canvas, the image files sufficient to reproduce and render within a fixed dimensioned viewport at least a portion of the first canvas; download at least some of the image tiles of a second canvas to permit remote structured assembly of a portion of the second canvas in the viewport, wherein the second canvas has a higher resolution than the first canvas and the second canvas has more image tiles than the first canvas.

The program is may be further arranged to make a computer execute procedure to: generate and send image tiles for each canvas that only contain datapoints or slope data, whereas tiles identified at the server (150) as containing no slope or datapoints are coded and sent blank.

In yet another aspect of the invention there is provided a method of generating and rendering datapoints for time-varying data acquired by a system monitoring parameter variations, the method comprising: processing a range of stored time-varying parameters to produce, on demand, a plurality of plotted graphical representations that each show variations or trends in the plotted time-varying parameters in different resolvable detail, each graphical representation structured as a canvas assembled from rendered image tiles, at least one of the plotted graphical representations realised by a multiplicity of image tiles; downloading at least some image tiles associated with a first canvas, the image files sufficient to reproduce and render within a fixed dimensioned viewport at least a portion of the first canvas; downloading at least some of the image tiles of a second canvas to permit remote structured assembly of a portion of the second canvas in the viewport, wherein the second canvas has a higher resolution than the first canvas and the second canvas has more image tiles than the first canvas.

In still yet another aspect of the invention there is provided a computer having: a processor running a web-based browser; and a graphics user interface configured or arranged coherently to render image tiles into a dimensioned viewport of preselected size, the image tiles received by the computer and compiled to produce a plurality of canvases of time-varying telemetry data, each canvas having a varying number of image tiles that produce a plurality of graphically plotted representations having different degrees of resolution; wherein the processor execute program code to cause a selected point of interest common between first and second canvases to appear in the viewport at the same position irrespective of resolution level and irrespective of the number of image tiles generated in the second canvas.

In a further aspect of the invention there is provided a computer comprising: memory storing measured, time-varying parameters acquired from monitoring an operating system; and a processor arranged or configured to: access the memory to recover a range of the time-varying parameters and to process the range to produce, over time, a plurality of plotted graphical representations that each show variations or trends in the plotted time-varying parameters in different resolvable detail; generate each graphical representation as a structured canvas of image tiles, at least some of each canvas viewable within a viewport having a predetermined size; to communicate at least some of the image tiles in a first canvas to permit structured assembly of that first canvas in the viewport; and subsequently to communicate at least some of the image tiles in a second canvas to permit structured assembly of that second canvas in the viewport, wherein the second canvas has a higher resolution than the first canvas and the second canvas has more image tiles than the first canvas.

The preferred embodiments of the present invention therefore make use of browser-based software which uses image tiling techniques to display interactive charts of large scale, time-based datasets. By employing the tiling technique to the processing of large datasets at the server, speed of delivery is significantly improved given that a client-selected viewport contains a fixed number of tiles (irrespective of selected data granularity), with the tiles pre-rendered at the server and communicated for assembly into an array and display at the client.

Advantageously, the present invention provides a highly responsive and interactive method of viewing graphed, time-based data assembled from and containing large datasets. The preferred embodiments therefore improves the ability both to "drill-down" into data and also to appreciate the contextual significance of particular data (or sub-trends within a narrow data subset) within either adjacent, wider or narrow windows (or viewports), thereby facilitating trend identification. Moreover, use of a fixed viewport within the various embodiments permits easy toggling and faster, if not near instantaneous, access to different regions, layers or granularities of data. Users are therefore better able to see changes taking place and to interact intuitively and seamlessly with rendered chart/graph and their underlying data.

The fixed dimensions of the viewport beneficially mean that, irrespective of the zoom level, data load times are consistent and the rendering the chart or graph is consistently fast because of this fixed viewport size. Moreover, chart-rendering performance remains the same as the dataset size increases and also as the number of datasets to plot increases.

Moving the data processing and chart rendering components to the server means that the client machine now need only to download a matrix of images and display them in a browser; this is something well within the capabilities of both low- and high-end computers.

In various embodiments, browser-based software uses image tiling techniques to display interactive charts of large scale, time-based datasets. Image tilesinstantiated from code loaded in memory associated with a server dynamically generates image files (typically as *.png* files or equivalent) at the server, which files are then selectively called up and downloaded to a client system for display. The server operates to consolidate requested data into averaged data points and then renders an overall graphic representation by appropriately assembling the averaged data points into discrete tiles. Image tiling assembly software at the client system assembles a composite image of a portion of a chart/graph for a user-selected region at a selected resolution within a viewport of predetermined size; this considerably improves graph interaction and reduces rendering times over existing Flash-based solutions. Further, the server is configured to pre-empt selection of any particular area by generating a further sub-layer of tiles that would, upon request, be immediately downloadable to the client system.

Brief Description of the Drawings

Exemplary embodiments of the present invention will now be described with reference to the accompanying drawings, in which:

FIG. 1 and FIG. 2 are graphical representations showing measured parameter variations (such as oil and pressure changes in an engine or currency fluctuations) with time, the graphical representations rendered using a prior art flash-based solution and averaged spot values;

FIG. 3 is a block diagram of a data acquisition and data presentation system adapted to support the preferred embodiments of the present invention;

FIG. 4 and FIG. 5 are graphical representations of showing the preferred construction techniques for rendering graphs from datasets acquired from monitored events;

FIG. 6 is a flow diagram of the processes employed by the various embodiments of the invention to supply the rendered graphical representations of FIGs. 4 and 5;

FIG. 7 shows exemplary graphically-rendered forms of interleaved data sampled at different sampling rates;

FIG. 8 is a graphical representation of thousand-point dataset plotted of a viewport canvas of the preferred embodiment at a zero scaling;

FIG. 9 is a graphical rendering about the mid-point (500th) datapoint of FIG. 8;

FIG. 10 is a graphical rendering illustrating trend line generation through a tile containing no plotable datapoints; and

FIG. 11 illustrates the relationship arising between viewport size and tile generation for canvases of datapoints at varying levels of detail, the illustration consistent with a preferred processing regime employed in the system of FIG. 3.

Detailed Description of a Preferred Embodiment

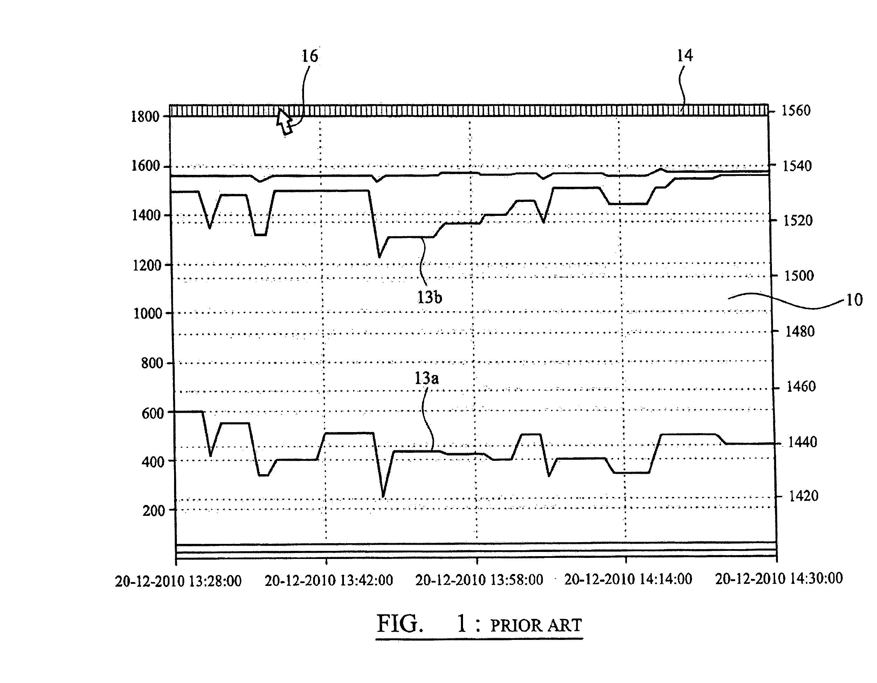

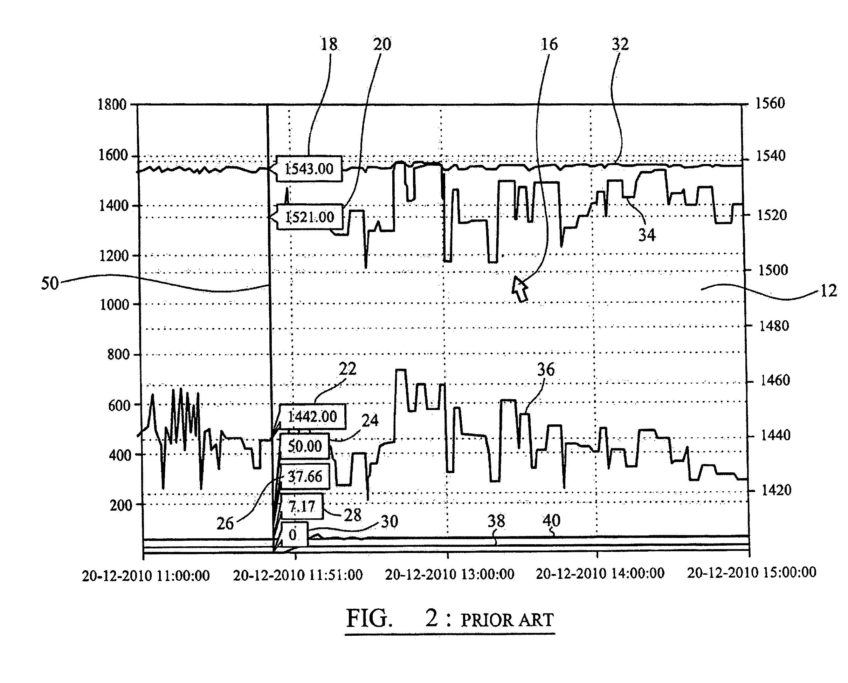

Referring to FIG. 1 and FIG. 2, graphical representations 10, 12 show measured parameter variations 13a, 13b with time, which graphical representations 10, 12 are rendered using a prior art Adobe Flash-based solution and averaged spot values. Unit labelling of the ordinate axis is omitted since it is not germane, with the abscissa merely divided into units of time. The parameters can be any measureable quantity and quality, including physical data collected by sensors in, for example, an engine or more esoteric data related to financial market conditions.

FIG. 1, taken as a screen shot, shows how (during interaction), a position of the scroll bar 14 lags behind the position (and hence desired data of interest) of mouse pointer 16.

In FIG. 2, a further screen shot illustrates the effects of how, in a FBS charting module, a real-time delay occurs between the actual (and hence desired) position of the mouse pointer 16 and generated pop-up data 18-30 that overlay and obscures various datapoints of different plotted graphs 32-40 at a formerly selected instance in time (represented by vertical line 50). It will be appreciated that the selected instance 50 may actually only arise as a consequence of a pause in movement of the mouse and may, in fact, not actually be a "selected" point. Further, whilst the abscissa shows a four-hour window of variations, the window is fixed in that the edges are absolute and can only be extended by loading a new dataset that requires extensive of data points for that new dataset.

In both cases of FIGs. 1 and 2, the data and its plots are all shoe-homed into the viewport.

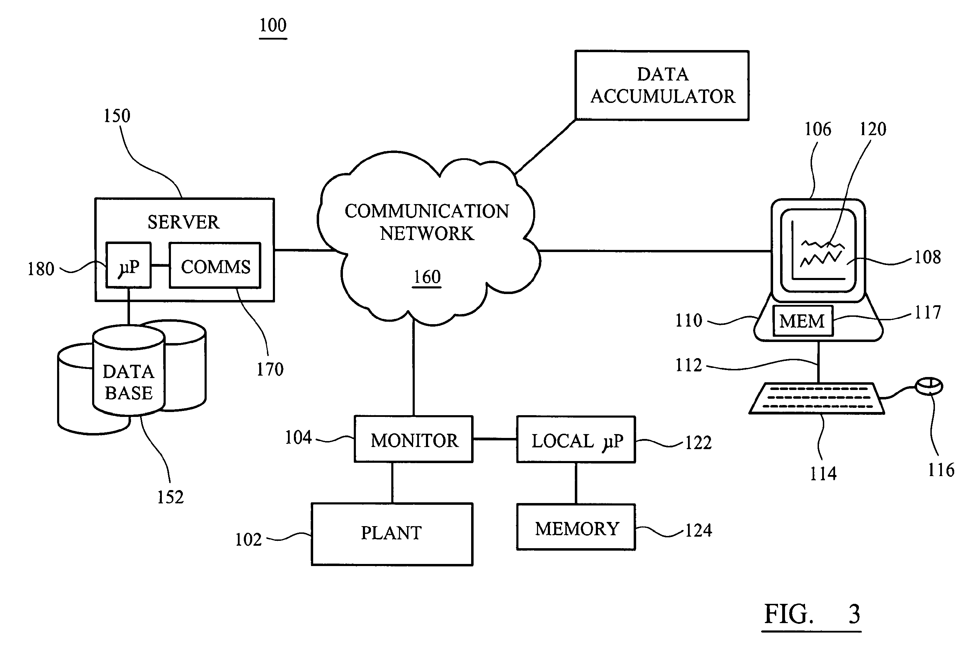

Turning to FIG. 3, there is shown a block diagram of a data acquisition and data presentation system 100 adapted to support the preferred embodiments of the present invention.

A plant 102, such as an engine, includes monitoring equipment 104 realised by a telemetry system typically having counters and/or pressure, temperature, movement, light and/or conductivity sensors and the like, as will be readily understood. The plant 102 may be remotely located from a data presentation (or "client") system 106, although this need not necessarily be the case. The plant 102 may be static in the sense that it is physically located in a building, but equally it may be moveable (such as within car).

The client system 106 is typically realised by a human-machine interface (HMI) comprising a visual display unit (VDU) 108, a processor-based computing platform realized, for example, by a computer 110 having a processor for running software applications (stored locally or otherwise downloaded as required) and a human-machine interface (HMI) 112, such as a keyboard 114 and/or mouse 116 or the like, permitting selective instantiation of programs and apps and interaction with those application and the presented data 120 displayed on visual display unit (VDU) 108. As is usual, the computer has associated memory 117, including a RAM cache or discrete RAM.

Operation of the engine 102 therefore generates data from the monitoring equipment 104. Typically, the monitoring equipment is responsive to a local processor 122 having associated memory 124. The monitoring equipment typically accumulates data in memory 124 and then either processes the data (as described below) or otherwise forwards the raw sample data (either in real-time or in batches) to a centralised computing resource, such as server 150 and associated database 152. A server-based configuration is preferred on the basis that it acts as a centralised resource, provides back-up capabilities and limits the complexity and processing power associated with the monitoring equipment 104.

If the local processor 122 associated with the monitoring equipment is configured both to process and then store the data in memory 124, then the client system 106 may interact directly with the local processor rather than to refer to the server 150 (and its database). In this arrangement, the local processor 122 and its memory 124 replace the need for the server and database since their functions can be considered as essentially equivalent. However, for technical and other system security reasons, the preferred embodiment has the client system 106 interact via the server 150.

In a preferred embodiment, the server 150, monitoring equipment 104 and client system 106 are linked together through a communications network 160, which network may make be a wide area (WAN), such as the internet, and may make use of wireless transmissions or wired transmissions either on a continuous or discontinuous basis. Equally, the communications network 160 may be a local area network (LAN). Although only shown within the server, each of the interacting unit includes an appropriate communications interface 170 for supporting the transmission, reception and/or request of data, as is described below.

The server 150 contains a processor ($\mu$P) 180 that control operation of the server and, as necessary, timely processes raw sample data received from the monitoring equipment 104. The processor 180 is therefore configured to control storage of this processed data and/or raw sample data in the database 152 and further functions to retrieve and selectively send, upon request, aspects of processed data to the client system 106.

Although the foregoing description has been targeted towards a physical system, there are also applications for the invention in other areas of technology and commerce. In this respect, FIG. 3 further includes a data accumulator 190 that may range from a simple data input device (where a person manually collates and inputs parameter data, such as rainfall data) to a computer that is to record automatically the variations in selected stock prices and other influencing factors that may themselves be acquired by automated data-mining software or otherwise manually input by time-referenced entry of data, e.g. keystroke entry of specific intervention actions by a central bank that affect measureable parameters in the wider economy. The data accumulator 190 should therefore also be considered functionally equivalent to the monitoring equipment 104.

Once the raw data samples have been recorded by the telemetry/monitoring equipment 104 (or otherwise entered in a database record), the preferred embodiments each process the raw data samples to render a composite graphical image assembled from multiple tiles. In this respect, a preferred embodiment makes use of image tiles (instantiated from code loaded in memory 124 associated with the server 150 or local processor 122 associated with the plant 102, as the case may be) to generate image files at the server 150, which files are then selectively called up and downloaded to the client system 106 for display on VDU 108. Mapping-based tiling software available at the client (e.g. browser-based software or specific program code stored in memory coupled to the computer 110) is then utilised to assemble the composite image for a selected resolution of a user-selected region. The server side therefore processes the raw data while the client side is tasked to arrange the tiles into a structured array to produce a composite rendering of the selected region of the graph (whether this is all the data or a distinct region and/or a particular resolution with respect to that selected distinct region).

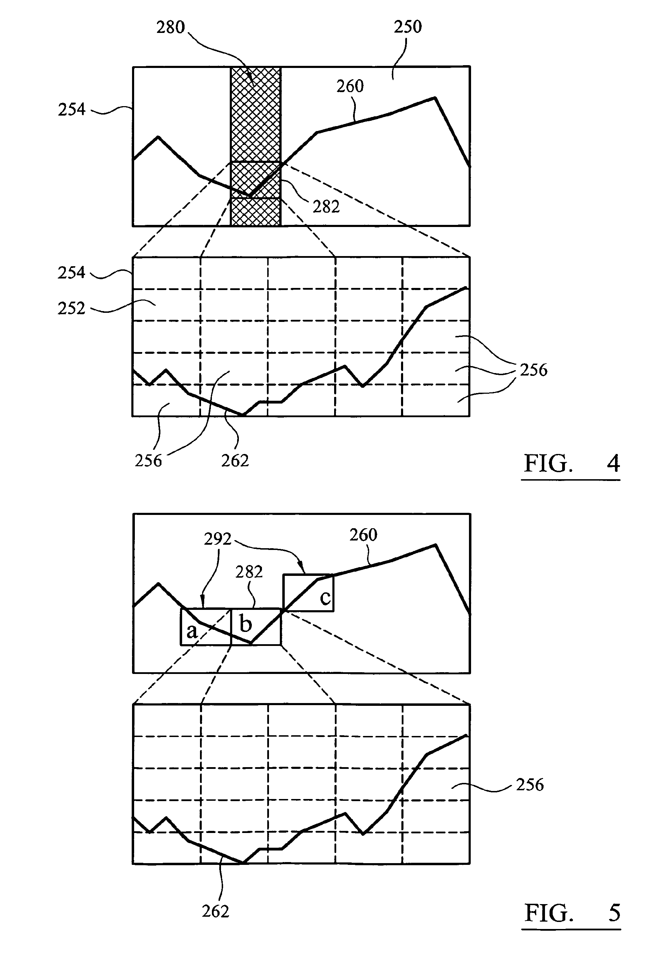

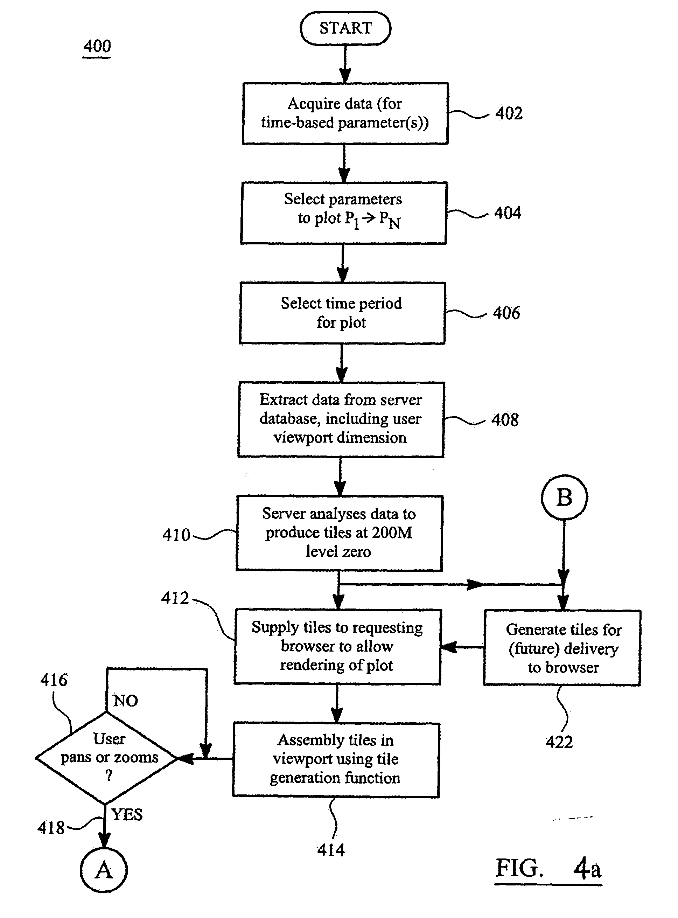

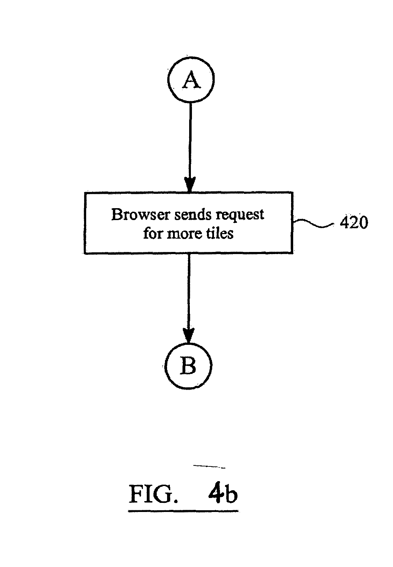

Referring to FIGs. 4 and 5, there are shown some rendered representations 250, 252 assembled in a fixed sized viewport 254 that contains a fixed number of image tiles 256. For example, the viewport may be defined as having a fixed width of, say, six hundred and forty pixels, with the viewport assembled from a two-dimensional array of 25 tiles in a 5x5 arrangement. Of course, the viewport 254 can be constructed from different numbers of tessellated tiles of a given pixel size and shape. For example, each tile may be sized at 100x100 pixels.

Server-side

The fixed width of the viewport 254 allows the server 150 to make averaging scaling decisions based on the time-interval of the requested data and the resolution of the viewport 254. Having determined an optimum number of pixels per data point, the server side software consolidates the requested data into averaged data points and then renders an overall graphic representation 260 by appropriately assembling the averaged data points into discrete tiles; this can be considered as an initial graph. Each tile therefore includes a partial representation of scaled raw data represented in the form of a part of a graph. More particularly, the server's processor retrieves an appropriate amount of data from database 152 in order to create an image for each tile 256 that contains plottable datapoints (as opposed to a zero plot and no specific data/information). Tiles that contain no plottable datapoints relevant to the slope are considered "empty" and therefore, generally, do not need rendering. For example, in both graphical representations both FIGs. 4 and 5, the top left tiles contain no plottable data and therefore are white/blank.

However, a gradient line drawn between datapoints exhibited in first and second tiles might pass through a further tile adjacent to the first and second tiles. In this case, the gradient line represents salient information that requires rendering and communication from the server, notwithstanding that the further tile may not itself contain any plottable datapoint.

Expressing this in a practical sense but within the context of the preferred embodiment, regardless of selected resolution, each viewport 254 has a fixed number of tiles displayable within the viewport.

In having to deal with the processing and display of dynamically variable datapoints, the preferred embodiments each operate to generate tiles on-demand since it is not possible to anticipate what the user will want to chart. This contrasts with a static data situation where libraries of high-resolution tiles can be produced in advance, which libraries each support different zoom factors or magnifications and from which images or tiles are ready for download to a browser as and when they are needed.

With respect to tile generation at both an initial level and a higher resolution sub-level (according to the preferred embodiment of the present invention), the technical concepts can be better appreciated when considering an exemplary browser viewport with nominal dimensions of 800x600 pixels. Such a viewport could be divided into a matrix of eight columns by six rows yielding equally sized square tiles of 100x100 pixels.

To bring about a zooming effect, each square or tile at the lowest resolution is subdivided into a predetermined number of smaller but equally-sized squares, e.g. one 100x100 pixel square at the lowest resolution is divided into four 25x25 pixel squares. The initial content of the lowest resolution square is therefore still unchanged and is expressed at the same resolution as used for rendering the initial 100x100 pixel square, albeit that the content is now distributed across four 25x25 pixel squares. In now moving to the next level of zoom/magnification, each of the four 25x25 pixel squares is then scaled back up to and rendered as individual 100x100 pixel squares. Dividing each square into quarters doubles the resolution resulting in each zoom level being exponentially larger, e.g. a mathematical squaring relation if the scaling of tiles is 1:4. This effectively means that the scaling produces an expanded square of 400x400 pixels.

By increasing magnification to the next zoom level up, the viewport sizing is not actually changed, albeit that the datapoints are not all visible from the fixed-size viewport. Rather, the expanded canvas is viewable when areas of it are dragged into and out of view from the viewport 254.

Table 1 below shows the relationship between image size, canvas dimensions and magnification for a viewport assembled from the perspective of an initial 8x6 tile array.

| Zoom Level | Columns | Rows | Tiles | Accumulated Tiles | Equivalent Canvas Dimensions | Image size (bytes) |
|---|---|---|---|---|---|---|
| 0 | 8 | 6 | 48 | 48 | 800 x 600 | 480k |
| 1 | 16 | 12 | 192 | 240 | 1600 x 1200 | 1.92M |

Table 1

| 2 | 32 | 24 | 768 | 1008 | 3200 x 2400 | 7.68M |
| 2a | 48 | 36 | 1728 | - | 4800x3600 | 17.28M |
| 3 | 64 | 48 | 3072 | 4080 | 6400 x 4800 | 30.72M |
| 4 | 128 | 96 | 12288 | 16368 | 12800 x 9600 | 122.88M |
| 5 | 256 | 192 | 49152 | 65520 | 25600 x 19200 | 491.52M |
| 6 | 512 | 384 | 196608 | 262128 | 51200 x 38400 | 1.96608G |

The number of tiles required by a zoom level n for an initial 8x6 grid is given by the expression:

$$\frac{3(2^{2n+6})}{4}$$

Assuming that generated images would only need an 8-bit colour depth and that, for explanation purposes only, data is logged at sixty second intervals for one hour (i.e. 3,600 datapoints), tests have shown that a chart showing data-points plotted at ten-pixel intervals provides a suitably high resolution for detailed investigative work. Therefore, the equivalent canvas size required to plot 3,600 data-points at this resolution would be 36,000 x 27,000 = 972Mb, which (due to the log scale) is roughly halfway between zoom levels 5 and 6.

To identify sub-trends within trends, it is expected that a majority of analysis will require rendering of tiles at zoom level 5 or zoom level 6; this requiring relatively high resolution as detailed in Table 1 above. However, it has further been recognized that the rendering of potentially tens of thousands of tiles is both impractical, requires considerable memory and processing resources and does not scale for multiple users. A preferred embodiment of the present invention therefore targets dynamic and selective tile generation.

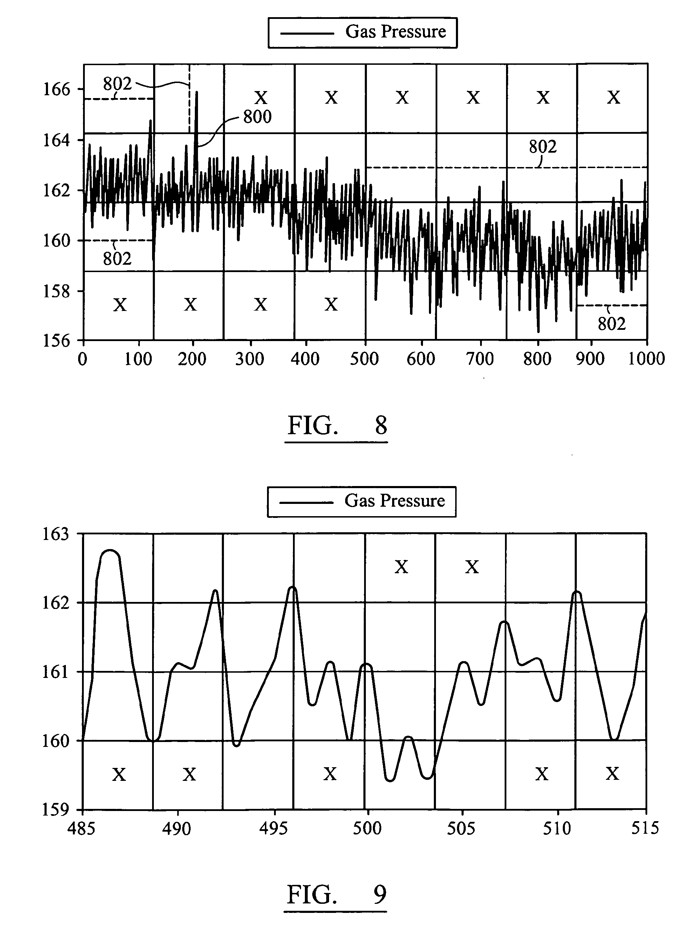

Consider a dataset of one thousand data points plotted on a canvas which matches the size of the browser's viewport (at zoom level 0); the dataset is plotted in FIG. 8 as graph 800. Observations of FIG. 8 reflect that some of the tiles contain no information whatsoever, i.e. no datapoints and no trend lines. Consequently, a matrix can be generated that represents data within the plot at zoom level zero, which matrix is reproduced below and in which a "0" represent no information and a "1" trend information.

Table 2

| 1 | 1 | 0 | 0 | 0 | 0 | 0 | 0 |
|---|---|---|---|---|---|---|---|
| 1 | 1 | 1 | 1 | 1 | 1 | 1 | 1 |
| 1 | 1 | 1 | 1 | 1 | 1 | 1 | 1 |
| 0 | 0 | 0 | 0 | 1 | 1 | 1 | 1 |

Translating this matrix back into FIG. 8, it will be appreciated that the rendering of ten tiles on zoom level (marked with an "x") can already be discarded at all zoom levels; this representing a saving in processing of (initially) 31.25%.

Further, rendering can further be reduced on the basis that the rendering program is programmed to recognise that certain of these level-0 tiles can, in fact, be treated differently in that only portions of selected tiles need to be rendered. Particularly, a further eight of the level-0 tiles can be divided in half since only one half of the tiles contains any information. The use of a horizontal or vertical dashed line 802 illustrates dissection of the tile into half tiles containing either datapoints or nothing. Therefore, in additional to the ten zero-information squares, a summed total of four additional squares require no plotting at any zoom level. The result is that there are a further 4,096 blank tiles at zoom level-5.

When centred on the 500th data point, the 5th level of zoom might provide the detail illustrated in FIG.9 in which certain tiles (marked "x") are again devoid of datapoints and trend information. In the zoom level-5 plot of FIG. 9, twenty-five of the thirty-two tiles contain a trend line, with an "x" marks an empty tile. At zoom level-5, the canvas would usually consist of 49,152 tiles, albeit that the viewport 254 would be limited to displaying only thirty-two (in the example of FIG. 8) at any one time. Further, at zoom level-5, each original square (at zoom level-0) will have been sub-divided into 1024 squares. The matrix shown above therefore shows that, immediately, 10,240 tiles are blank at this and any zoom level.

With the program configured to cause the server only to generate tiles that contain trend information, rendering of the exemplary plot of FIGs. 8 and 9 would only generate a maximum of 34,816 tiles; this representing a 30% saving. However, from a visual inspection of other tiles on the zoom level 0 plot, it is further apparent that, as the zoom level increases, the number of blank tiles will also increase. This means that, according to the processing requirements of the preferred embodiments, the total number of generated tiles will be significantly lower than 34,816.

A typical 17" (43.18cm) LCD monitor with a resolution of 1280x1024 pixels displays 96.2 pixels per inch (or per 2.54cm). At zoom level-5 the resulting canvas would therefore equate to a width of 25,600 pixels or approximately 6.8 metres. If the user is inspecting detail at one end of the dataset, it is unlikely that they will scroll through over six metres of chart to reach a point of interest at the other end of the data set. A more likely scenario is that they would zoom out to a low zoom level and then zoom back in at the point of interest. Consequently, the rendering and communication of tiles is significantly quicker relative to pre-existing FBS techniques where each screen magnification and viewport must be calculated at the client.

In a preferred embodiment, plots of different parameters are rendered independently of each other, with a composite plot produced by overlaying these individual plots at corresponding scaling factors. Independent rendering therefore permits isolation of trends and independent analysis of trend detail for a given monitored parameter, e.g. pressure variations with respect to time or instantaneous power output levels.

Tiles are therefore preferably generated as transparent GIF or PNG files (or the like) to allow for overlaying of different trend lines.

In overview, the server (and particularly its associated control program) is configured or arranged to generate tiles that contain trend information and, preferably, to generate tiles in response to user-selected interaction pertaining to viewport "panning", "zooming" or "warping".

With respect to the mechanism by which tiles are generated at the server, a preferred embodiment generally functions in the following manner.

The preferred tile generation function ("TGF") initially processes datapoints in the visible portion of a dataset in order to expedite population of the viewport 254 with tiles. The initial datapoint is normalized to allow tiles at the same zoom level (but generated at different times within a given chart request) to be easily tessellated.

To appreciate the nature of the generation process, an exemplary 800x600 viewport is considered in which a chart is created from 100x100 tiles. For the sake of this example each tile at zoom level 1 displays one hundred datapoints and each tile in the immediate sub-layer (i.e. zoom level 2) displays fifty datapoints. For the sake of simplicity and ease of explanation, the following discussion considers generation of only x-axis data, although the process clearly applies to both x-axis and y-axis data. In the exemplary case, the user zooms to a point of interest within zoom level 2 such that the left-most datapoint displayed in the viewport is datapoint 173 (on the abscissa). The user then zooms out and in to another point of interest at zoom level 2, such that datapoint 315 is now the left-most datapoint displayed by the fixed viewport. Since each tile in zoom level 2 contains 50 datapoint in each axis, to cover the selected range the system (starting at datapoint 173) would generate individual tiles having datapoint ranges: i) 173-222; ii) 223 to 272; and iii) 273-322.

And then to cover the second range (starting at point 315), the system would generate tiles having datapoint ranges: iv) 315-364; v) 365-414; and vi) 415-464.

Clearly, tiles (i) to (iii) generated by the first zoom do not tessellate with the tiles (iv) to (vi) generated by the second zoom. In reality, it would be usual for the two zoom points to be much further apart at such a much low-level zoom factor, with the example here being a simplification to aid understanding.

To ensure that tiles perfectly match-up, the system is preferably arranged to normalize tile boundaries for requested points of interest at a given zoom level. In terms of the x-axis each tile at a given zoom level would contain the following datapoints:

### Table 3: exemplary relationship between tiles and datapoint ranges for varying zoom levels

| Zoom level 1 | Tile | 1 | | 2 | | 3 | | 4 | |
|---|---|---|---|---|---|---|---|---|---|
| | Data Point Range | 0-99 | | 100 to 199 | | 200 to 299 | | 300 to 399 | |
| Zoom Level 2 | Tile | 1 | 2 | 3 | 4 | 5 | 6 | 7 | 8 |
| | Data Point Range | 0 to 49 | 50 to 99 | 100 to 149 | 150 to 199 | 200 to 249 | 250 to 299 | 300 to 349 | 350 to 399 |

| Zoom Level 1 | Tile | 5 | | 6 | | 7 | | 8 | |
|---|---|---|---|---|---|---|---|---|---|
| | Data Point Range | 400 to 499 | | 500 to 599 | | 600 to 699 | | 700 to 799 | |
| Zoom Level 2 | Tile | 9 | 10 | 11 | 12 | 13 | 14 | 15 | 16 |
| | Data Point Range | 400 to 449 | 450 to 499 | 500 to 549 | 550 to 599 | 600 to 649 | 650 to 699 | 700 to 749 | 750 to 799 |

Thus, a request for a viewport displaying datapoint 173 as the left most datapoint at zoom level 1, would result in the generation of tile 4 from zoom level 2 (in the table above). The tile itself would preferably be displayed offset to the left so that datapoint 173 is displayed as the viewport's left most datapoint. And a later request for datapoint 315 would result in the generation of tile 7, which would fit perfectly with tiles generated by the first zoom point.

Each datapoint is also analysed to determine if it belongs to the current tile under generation, or otherwise indicates the completion of the current tile and the creation of a new tile. If a new tile is generated, a check is performed to determine if it is immediately adjacent to the previous tile. If consecutive datapoints lead to the creation of non-adjacent tiles (in the sense of edge adjacency), extra tiles containing trend lines are generated to fill the intervening space so as to provide a contiguous region.

From an implementation perspective, each generated tile is assigned to an equivalent canvas location in a sparse tile location lookup table, such as shown in Table 1 above. As previously indicated, any tile locations that are not present in the lookup table are assumed to be empty.

As soon as the TGF has generated tiles visible in the viewport 254 (that covers a selected portion of the canvas), the tiles are sent along with related equivalent canvas location data to permit a browser-based application at the client to render the display. The canvas location data therefore permits the client-based browser to cross-reference the positions of tiles of identified importance relative to the canvas and position of the viewport 254.

The displaying of image tiles that make up graphs therefore places virtually zero processing resources on the client's processor relative to those resources demands required in FBS processing.

With the production of a canvas that extends outside of the areas of the viewport 254, the TGF is preferably programmed to continue to generate non-visible tiles and to send them automatically to the browser for storage and use. Storage of these initially non-visible tiles (in each zoom level) therefore permits the browser (at the client 106) to implement a panning function to across the abscissa axis, e.g. backwards and forwards through the time domain.

So, by way of intermediate summary, the preferred embodiment of the present invention accumulates telemetry data that can be represented as graphed datapoints on a "canvas" assembled from tiles produced at a server and assembled (i.e. rendered) at a remote web-based computer terminal having an appropriate graphic-user interface (with a defined size of viewport). To access higher data granularity to enhance detail in specific data ranges, greater numbers of tiles are generated for each successive layer; these layers permit the user to zoom into and examine trends in data within the overall canvas of rendered datapoints. To move between different zoom levels (and thus between different numbers of tiles per zoom level), the control logic (i.e. a computer program executing on the server) of the preferred embodiment is arranged or configured to present datapoints such that the relative movement of the canvas with respect to the viewport (of fixed dimensions) causes a selected point of interest on the canvas to appear in the viewport at the same position irrespective of zoom level and thus irrespective of the number of tiles generated for the canvas at a particular zoom level.

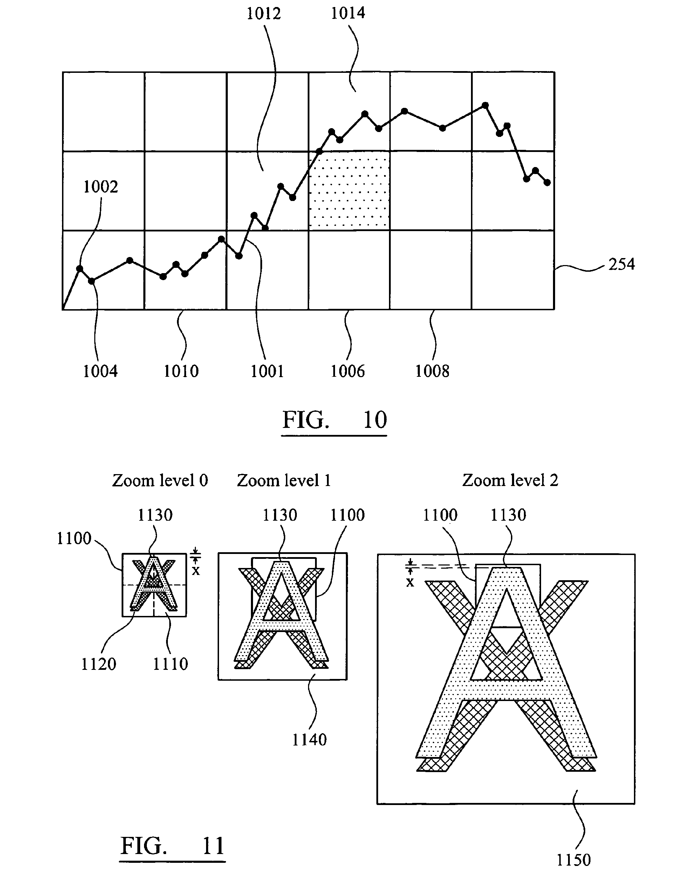

In practical terms, FIG. 11 illustrates the effect of zooming and the varying number of tiles generated for each zoom level as displayable within a viewport. FIG. 11 in fact shows datapoints generated within a fixed dimension viewport 1100. More specifically, for the sake of explanation, the datapoints generate the capital letter "A" overlaying a capital letter "X". This form of representation merely aids in understanding what content is displayed within the viewport at successful zoom factors (and in the context of the overall canvas that contains the "AX" combination.

At zoom level zero, a first canvas 1110 is assembled within the viewport 1100. It is assumed (in this example) that the first canvas 1110 entirely fills the viewport 1100, with the first canvas assembled from a predetermined number of tiles 1120 of fixed size, e.g. four equally sized tiles in the case of zoom level 0. It is noted that the upper cap-portion of the letter "A" is central but displaced from the top of the viewport by a distance "x".

The user (using a GUI and the browser), selects a point of interest 1130 as being a central point along a cap-portion of the letter "A". For example, the user moves a cursor over the rendered datapoints in zoom level 0 and double clicks to select a higher resolution. [Of course, other mechanisms for moving between zoom levels can be employed, e.g. keystroke entry]. Now, upon rendering a representation at zoom level 1 and an expanded second canvas 1140, the level of detail has increased since the second canvas 1140 now contains sixteen tiles of the same fixed size. However, the size of the viewport 1100 within zoom level 1 has not changed and still supports only four tiles, albeit that the expansion in detail within the second canvas 1140 means that each tile contains a higher resolution of data. Again, it is noted that the upper cap-portion of the letter "A" is central but displaced from the top of the viewport by a distance "x". In other words, the relative movement of the assembled datapoints with respect to the viewport 1100 (of fixed dimensions) causes a selected point of interest on each canvas to appear in the viewport at the same position. Expressing this differently, the coordinates/position of the selected point 1130 relative to its position in the viewport are maintained irrespective of zoom level or, differently again, each canvas (containing the plot of datapoints) is positioned relative to the viewport so that a point of interest is presented at the same place in the viewport across multiple zoom levels.

If the user pans laterally within the viewport 1110, then the tiles rendered within the viewport 1110 change, e.g. new tiles appear, some tiles move out of view (but remain within the overall canvas) and other tiles move relative within the viewport. In effect, the representative box is simply moved relative to the confines of the overall dimension of the canvas. In zoom level 0, no movement would generally be possible, since movement of the viewport would mean that require meaningless data fill, e.g. shading representing an "out of range" situation, to be rendered within the viewport.

Assuming that the user again zooms to yet further detail (offered by zoom level 2 relative to zoom level 1) about datapoint 1130, a third canvas 1150 of datapoints now extends across 4x16 (i.e. 64) tiles. However, the point of interest 1130 is still displaced by the distance "x" from the top of the viewport 1100 and still remains centrally (because the x-displacement of the point of interest was, in this exemplary case, always central). In other words, although detail has increased, the relative movement of the assembled datapoints in the third canvas 1150 with respect to the viewport 1100 (of fixed dimensions) causes the selected point of interest 1130 across each of the canvases to appear in the viewport 1100 at the same position.

In a preferred embodiment, if the user pans to a location which the TGF has not yet processed, instead of displaying blank squares the browser viewport will preferably display scaled versions of tiles from the zoom level above it that contains tiles.

In general, the TGF is configured to prioritise, firstly, generation of required tiles and, secondly, tiles in the canvas that are adjacent to those in the view port or at the next level of zoom-level detail. This dynamic adaption in processing has the general effect of reducing access times and optimizing downloaded and displayed of selected tiles in the viewport.

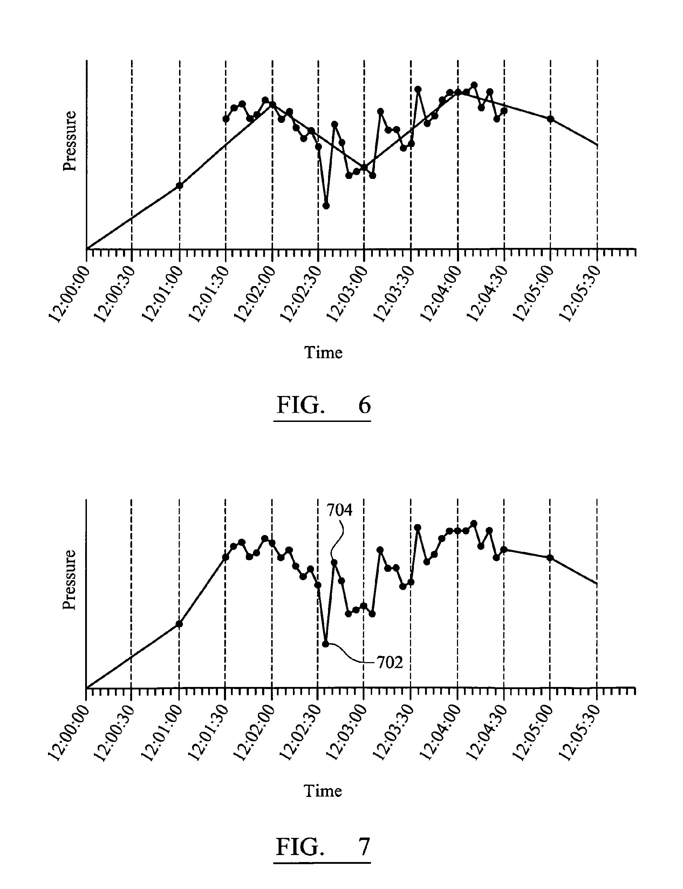

To further expedite the processing and sending of tiles, the TGF attributes higher rendering priority to tiles associated with user selected regions. In a practical sense, this can be understood from the context of a spike within a trend. Specifically, review of low resolution data will generally be the first step to identifying a trend, since lower-resolution (e.g. zoom level-0 rendering) permits easily identification of significant "spike" events (see, for example, datapoints 702 and 704 of FIG. 7) occurring within the overall plot of the data. Analysis and/or inspection of the spike is subsequently undertaken at higher zoom levels where spike detail and surrounding parameter events associated with and/or attributable to the spike can be identifiable and broken down by such higher resolution. The TGF is therefore preferably configured such that parallel tile generation processes will generate tiles at each zoom level around a point of interest, which point of interest is initially identified by virtue of user-selection and a request to zoom into detail. That said, it is preferred that processing and rendering priority is given to TGF processes that generate tiles at the current zoom level to maximise the number of tiles available for panning and only then to begin to drill down to higher resolutions initially around current points of particular interest.

In other words, once an area of interest has been identified, the TGF operates to focus tile generation resources initially about this area in a ripple-like expansion within the base zoom level, whereafter the TGF operates to expand the detail around the point of interest in each subsequent layer. In this way, the outward ripple-effect occurs within each zoom level and tile generation towards the periphery of the chart may not be completed (in a first, relatively low zoom level) before the generation of higher-resolution tiles is commenced (at second or even third relatively high zoom level(s)).

According to a preferred embodiment, the TGF and browser applications co-operate such that, if a user pans to an adjacent location somewhere on the current canvas of the selected zoom level, background parallel tile generation processes will switch to generating higher zoom level tiles centred about the new location. This weighting towards lower resolution renderings increases speed of access and speed of identification of new areas of interest, whereas relatively higher resolution permits the identification of detail.

It is preferred that all generated tiles are cached until the user requests a new chart. The caching preferably occurs at the server, but may also be locally to the client. Any new chart request will be analysed to determine whether previously generated (and thus cached) tiles can be reused. If tiles cannot be reused they are purged from the system.

In another complementary aspect to the TGF, it has been recognized that circumstances may arise where it is desirable that each axis of the chart be modified independently (i.e. to produce a "warp" in axis scaling) to emphasise changes in data parameters. Such a warping feature is useful when attempting to display a spike in a data set. Warping can be considered to be a special case of zooming, since only one data axis is stretched to identify the existence of finer detail trends within a localised range of the overall dataset. Ordinate-axis compression required to display a spike in the viewport generally results in a loss of detail due to the corresponding compression of the x-axis. However, by decoupling the axes and allowing zoom in one plane only, large data spikes can be viewed in relation to other local data points. The technical effect of the preferred rendering process is to permit the shifting between different (but related) planes of view that contain corresponding datapoints in ever finer granularity (as the zoom level increases). Initially, zooming (without warping) causes a drill down into data plotted in both the x-axis and y-axis, with each layer providing finer detail (as reflected in FIG. 4, for example). Once a desired zoom level is reached, a user may choose to zoom only in a singled direction to accentuate a particular trend in one of the plotted axes. This warping therefore causes a whole new set of tiles to be generated (using the processes described herein).

It has also been recognised that the TGF process of the preferred embodiments must recognize that certain tiles may contain no data points but may include plotable trend information that warrants priority processing for rendering purposes. Establishing which tiles contain trend information is far from trivial. Consider the situation shown in FIG. 10 in which a parameter plot 1001 includes multiple datapoints 1002, 1004 in each rendered tile 1006-1016 of the viewport 254. In light of a significant change in measured ordinate value between tiles 1012 and 1014 and the fact that contiguous datapoints cause a trend line to be drawn through an otherwise empty tile 1016 (emphasised through dotting) immediately to the right of tile 1012, the seemingly empty tile 1016 must be treated by the TGF as important and as relevant as other tiles containing one or more datapoints at the selected zoom level.

The TGF is therefore programmed or configured to be responsive to information pertaining to at least some of: (1) the size of the viewport; (2) the viewport's relative canvas location; (3) the current zoom level; (4) any applied warp factor; (5) the tile size; and 96) the selected point of interest where the user has clicked a mouse-pointer (from the client-based web-browser application) or, if a zoom control was used, the centre of the viewport 254.

Client-side

As previously indicated, the client side implements a fixed sized viewport 254 used for displaying the chart/graph 120 and supporting the higher levels of user interaction therewith, e.g. zooming and panning functions to facilitate trend identification on both large and small data resolution scales.

As shown in FIG. 4 (which is, for exemplary purposes, a time-based chart), once the initial graph is loaded/rendered, a user at the client system 106 makes use of the HMI to select a particular "zoom" area 280 of particular interest. With a time-based system, this amounts to a column of data, although the focus is actually concentrated to areas containing slope-related data, i.e. area 282 in the context of FIG. 4. To expedite the loading and potential toggling between adjacent areas in the graph/chart and/or detail within a specific area, the server 150 (in one particular embodiment) is configured to pre-empt selection of any particular areas by generating at least one further sub-layer of sub-tiles that are either cached locally and/or downloaded to the client system (preferably as a background process) should a request be made for rendering different or ancillary aspects or areas (including higher degrees of resolution or adjacent areas) of the graph/chart. Selection of a specific areas (e.g. areas 282) by a user therefore leads to eventual download (either immediate or upon a prompt caused by client action) of a subset of sub-tiles from the server 140 such that, when re-assembled by mapping-based tiling software at the client system, the sub-tiles would again exactly fill the viewport 254 on the display 108 by providing another 5x5 array in the exemplary case of viewport having a twenty-five tile 2-D arrangement.

Processing at the client system 106 is therefore considerably reduced and effectively is just the coordinated assembly of an array of tiles for a particular viewport and local rendering of an overall chart/graphic representation assembled from appropriate relative positioning of those downloaded tiles. The fixed viewport size means that whilst the user can access the full dataset, the presentation method ensures that the client system 106 is, in one embodiment, only initially sent a subset of the dataset, the subset thus dramatically reducing bandwidth overheads and decreasing user waiting time. Also, once tiles/sub-tiles have been generated, sent and received, the client system is able to cache (or otherwise store) data from different levels; this permits fast re-loading of graph/chart representations.

As previously indicated, rather than generating potentially multiple layers of data at the server, the sever 150 is configured to work with the client system together to pre-emptively generate image tiles in anticipation of the user's next interaction. By way of further explanation and with reference to FIG. 5, once a specific area of the chart has been identified, e.g. region 282, and zoomed in on, the sever 150 may automatically generates image tiles 292 for areas adjacent areas containing slope data, i.e. areas labelled "a" and "c" in FIG. 5. Preferably, these tiles would be downloaded to the client system 106 and cached in local memory 117 ready for display. The concept can be further extended to permit drill-down into the specific data of a particular tile, i.e. once an area of interest has been identified, the sever 150 operates to produce at least one sub-layer, with each sub-layer containing an appropriate number of sub-tiles corresponding to the predetermined viewport size.

In summary, over time, the server's processor 180 is configured to process layers of raw data into a fixed number of individual tiles per layer. This fixed number of tiles is then assembled into a viewport (of predetermined size) by the processor at the client system 106. Following a request from a client for a particular layer (which is effectively a request for a different resolution) and/or a particular window within a timeline of the entire dataset, the server sends the information/tiles germane for local reconstruction of the tiles (and hence the rendering of the graph) at the client system 106, the tiles producing an extended canvas that may or may not be fully visible through the fixed sized viewport 254.

In view of the dynamically varying nature of parameters recorded as logged data, a preferred embodiment makes use of control algorithms in the server 150 to interpret and, more especially, anticipate client demands for related data. In practical terms, this means that there is no need to build up and store tiles and sub-tiles for every possible granularity or detail level. Rather, the initial layer ("zoom level-0") is calculated such that a selected, but fixed-sized viewport can be rendered from a selectable number of tiles, e.g. twenty-five arranged in a five by five matrix. Thereafter, additional sub-layer or adjacent detail is added upon selection or demand.

It will now be appreciated that the preferred embodiments of the present invention can accommodate variable sampling rates. By way of example, data logging might usually be performed at a granularity measured in minutes. However, when an alarm is triggered, selectively measureable parameters might be logged every second for a set period or duration of the alarm condition. Combining this variable time-based data with normally logged data leads to a large dataset with irregular intervals, but the centralised processing power and capabilities of the server 150 are such that it can be harnessed to interleave minute and second based datasets to provide a correctly scaled display.

For example, FIG. 7 shows how data logged at five second intervals (i.e. relatively "high resolution" data) can interleaved with data logged at one minute intervals (i.e. relatively "low resolution" data). The higher grain data may be presented as an overlay (upper graph) over the lower sampling rate to provide dual-representation of trends and underlying but related sub-trends, or otherwise a composite representation (lower graph) shows a single trend covering all data points acquired from all applicable sampling rates. The server 150 is therefore functionally arranged to process the data at varying rates and to identify any change in sampling rates, whereafter control software plots an appropriate scaled representation for a selected viewport.

In a particular embodiment, it is contemplated that the server selectively omits zoom levels, thus reducing overall processing demand for the generation of tiles for each canvas. For example, only alternate zoom level canvases may be generated. However, in the event that the user (making use of their installed browser) wishes to view an omitted intermediate level, the server is configured to send the higher level (and thus more tiles), with the browser configured to compress the higher level tile image canvas; this provides a virtual level or virtual canvas. Compression has the effect of maintaining resolvable points within the dataset (but not necessarily on the screen) since all the higher resolution datapoints are merely presented at a lower granularity of zoom applied in the fixed-dimensioned viewport. The omission in the generation of certain canvases operates on the reasonable assumption that, in most instances, anomalies and other points of interest (relevant for micro-trend analysis) are generally identifiable at deeper, more detailed zoom levels. In contrast, if the server were to send a lower level canvas, then expanding that canvas to produce a virtual, higher resolution canvas at the browser would cause distortion that could not be compensated or resolved.

Referring to FIG. 4, an exemplary flow diagram 400 is shown that illustrates interaction between the server and browser applications. The exact process flow may vary from that illustrated, since the ordering of certain of the process steps is not critical to the overall interaction, as will be understood.

Data is firstly acquired by a monitoring system and stored 402 in a database typically associated with a server-based resource, the acquisition generally relating to time-based data. At a remote site that preferably makes use of a web-based browser to access data, a user selects 404 one or more parameters ($P_1$ - $P_N$) that are to be graphed. A selection 406 of a relevant time period for the plot may be made, subject to the size of the overall dataset or a particular frame of interest. Given this selection data, the server operates both to extract 408 pertinent data from its database and, as appropriate, identify the capabilities (e.g. pre-set or custom-set viewport dimensions) of the remote user's GUI. The server is then arranged to analyze the extracted data and to produce 410 individual image tiles that permit a remote tile generation function (at the browser) to assembly and render 412 an image. Tiles may be communicated using a data packet transfer protocol, for example. If appropriate, coding within a data packet or its header may used to indicate a "no data" transfer (i.e. a blank tile having no plottable data points and no trend line presence), with this reducing bandwidth requirements and processing load.

Using a tile generation function (as previously described), the browser-based viewer at the client site operates to assemble 414 the tiles within the available viewport. The user is thus able to pan or zoom through the assembled image and line trends, with the process effectively stalled until such time as either the browser is shut-down or, more likely, the user selects 416 a point of interest and initiates (affirmative path 418) a pan, zoom or warp process thereabout. A request 420 for zoom, pan or warp is communicated back to the server to instruct the server to send appropriate tile data, with the server tasked to generate and delivery 422 this data in response to the uplink request. As previously indicated, once the user has selected the time period and parameters, parallel server operation may commence in anticipation of the tiles that might potentially or reasonably be expected to be called for higher granularity canvases.

The terms "chart", "graph" and representation are used interchangeably and should be understood to relate to the graphical representation of plotable data points.

It will be understood that unless features in the particular preferred embodiments are expressly identified as incompatible with one another or the surrounding context implies that they are mutually exclusive and not readily combinable in a complementary and/or supportive sense, the totality of this disclosure contemplates and envisions that specific features of those complementary embodiments can be selectively combined to provide one or more comprehensive, but slightly different, technical solutions.

It will, of course, be appreciated that the above description has been given by way of example only and that modifications in detail may be made within the scope of the present invention. For example, while a preferred embodiment always makes use of multiple image tiles for each canvas, it is contemplated that a first (zoom level zero) canvas could be represented as a single image, provided that the web-based browser at the client is configured and capable to select a point of interest on that image and communicate its selection back to the server, thereby permitting the server to commence tile generation for higher resolution views within the viewport.

**Claims**

1. A telemetry system comprising:

   a data acquisition unit for monitoring and reporting measureable parameters within an operating system;
   memory for storing said measureable, time-varying parameters; and
   a server arranged or configured to:

   access the memory to recover a range of the time-varying parameters and to process the range to produce, over time, a plurality of plotted graphical representations that each show variations or trends in the plotted time-varying parameters in different resolvable detail;
   generate each graphical representation as a structured canvas of image tiles, at least some of each canvas viewable within a viewport having a predetermined size;
   upon receipt of a first request, selectively to communicate some of the image tiles in a first canvas to permit remote structured assembly of that first canvas in the viewport, the communicated image tiles selected to contain trend information of the time varying-parameters; and
   upon receipt of a subsequent request, selectively to communicate some of the image tiles in a second canvas to permit remote structured assembly of that second canvas in the viewport, the communicated image tiles selected to contain trend information of the time varying-parameters, and
   wherein the second canvas has a higher resolution than the first canvas and the second canvas has more image tiles than the first canvas.

2. The telemetry system according to claim 1, wherein dimensions of the viewport are set:

   i) so as to permit the presentation of a predetermined number of tiles; or otherwise
   ii) such that a fixed number of tiles is presented therein irrespective of canvas size.

3. The telemetry system according to claim 1 or 2, wherein the server is arranged or configured such that presentation of a particular canvas with respect to the viewport causes a selected point of interest on the first canvas to appear in the viewport at the same position irrespective of resolution level and irrespective of the number of tiles generated in the second canvas.

4. The telemetry system according to any preceding claim, wherein the server is arranged or configured to anticipate canvas selection by generating tiles in advance of receipt of the second request.

5. The telemetry system according to any preceding claim, wherein the server is arranged or configured to generate and send image tiles for each canvas that contain datapoints or slope data, whereas image tiles containing no information are coded as blank.

6. A method of presenting datapoints and trends in captured, time-varying parameter data rendered as a graphical image on a viewport of a display, the viewport having a fixed size permitting a constrained instantaneous display of the graphical image, the method comprising:

   monitoring, reporting and storing said measureable time-varying parameters;
   processing a range of said stored time-varying parameters at a server to produce, on demand, a plurality of plotted graphical representations that each show variations or trends in the plotted time-varying parameters in different resolvable detail, each graphical representation structured as a canvas assembled from rendered image tiles;
   downloading at least some of the image tiles associated with a first canvas;
   assembling the image tiles at a browser-based client to reproduce, initially, at least a portion of the first canvas viewable within the viewport (254, 1100);
   downloading at least some of the image tiles in a second canvas to permit remote structured assembly of that second canvas in the viewport, wherein the second canvas has a higher resolution than the first canvas and the second canvas has more image tiles than the first canvas.

7. The method of presenting datapoints and trends according to claim 6, further comprising:

   generating and sending image tiles for each canvas that only contain datapoints or slope data, whereas tiles identified at the server as containing no slope or datapoints are coded and send blank.

8. The method of presenting datapoints and trends according to claim 6 or 7, further comprising:

   upon demand, successively presenting a plurality of canvases at a web-based browser.

9. The method of presenting datapoints and trends according to any of claims 6, 7 or 8, wherein presentation in the viewport of a particular point of interest with a first canvas causes the selected point of interest in a second canvas to appear in the viewport at the same position irrespective of resolution level and irrespective of the number of tiles generated in the second canvas.

10. A computer readable medium having a computer program recorded thereon, the program arranged to make a computer execute procedure to:

    process a range of stored time-varying parameters to produce, on demand, a plurality of plotted graphical representations that each show variations or trends in the plotted time-varying parameters in different resolvable detail, each graphical representation structured as a canvas assembled from rendered image tiles, at least one of the plotted graphical representations realised by a multiplicity of image tiles;
    download at least some image tiles associated with a first canvas, the image files sufficient to reproduce and render within a fixed dimensioned viewport (254, 1100) at least a portion of the first canvas;
    download at least some of the image tiles of a second canvas to permit remote structured assembly of a portion of the second canvas in the viewport, wherein the second canvas has a higher resolution than the first canvas and the second canvas has more image tiles than the first canvas.

11. The computer readable medium according to claim 10, wherein the program is further arranged to make a computer execute procedure to:

    generate and send image tiles for each canvas that only contain datapoints or slope data, whereas tiles identified at the server as containing no slope or datapoints are coded and sent blank.

12. The computer readable medium according to any of claims 10 or 11, wherein the program is further arranged to make a computer execute procedure to:

cause a selected point of interest common between first and second canvases to appear in the viewport at the same position irrespective of resolution level and irrespective of the number of tiles generated in the second canvas.

13. A method of generating and rendering datapoints for time-varying data acquired by a system monitoring parameter variations, the method comprising:

processing a range of stored time-varying parameters to produce, on demand, a plurality of plotted graphical representations that each show variations or trends in the plotted time-varying parameters in different resolvable detail, each graphical representation structured as a canvas assembled from rendered image tiles, at least one of the plotted graphical representations realised by a multiplicity of image tiles;

downloading at least some image tiles associated with a first canvas, the image files sufficient to reproduce and render within a fixed dimensioned viewport (254, 1100) at least a portion of the first canvas;

downloading at least some of the image tiles of a second canvas to permit remote structured assembly of a portion of the second canvas in the viewport, wherein the second canvas has a higher resolution than the first canvas and the second canvas has more image tiles than the first canvas.

14. A computer having:

a processor running a web-based browser; and

a graphics user interface configured or arranged coherently to render image tiles into a dimensioned viewport of preselected size, the image tiles received by the computer and compiled to produce a plurality of canvases of time-varying telemetry

data, each canvas having a varying number of image tiles that produce a plurality of graphically plotted representations having different degrees of resolution;

wherein the processor execute program code to cause a selected point of interest common between first and second canvases to appear in the viewport at the same position irrespective of resolution level and irrespective of the number of image tiles generated in the second canvas.

15. A computer comprising:

memory storing measured, time-varying parameters acquired from monitoring an operating system; and

a processor arranged or configured to:

access the memory to recover a range of the time-varying parameters and to process the range to produce, over time, a plurality of plotted graphical representations that each show variations or trends in the plotted time-varying parameters in different resolvable detail;

generate each graphical representation as a structured canvas of image tiles, at least some of each canvas viewable within a viewport having a predetermined size;

to communicate at least some of the image tiles in a first canvas to permit structured assembly of that first canvas in the viewport; and

subsequently to communicate at least some of the image tiles in a second canvas to permit structured assembly of that second canvas in the viewport, wherein the second canvas has a higher resolution than the first canvas and the second canvas has more image tiles than the first canvas.

FIG. 1 : PRIOR ART

FIG. 2 : PRIOR ART

FIG.  3

EP 2 563 041 A2

280    250

254

260

282

254
252

256

256    262

FIG. 4

292    260

282

a  b  c

256

262

FIG. 5

FIG. 6

FIG. 7

<u>400</u>

START

Acquire data (for
time-based parameter(s)) — 402

Select parameters
to plot $P_1 \rightarrow P_N$ — 404

Select time period
for plot — 406

Extract data from server
database, including user
viewport dimension — 408

B

410 — Server analyses data to
produce tiles at 200M
level zero

412 — Supply tiles to requesting
browser to allow
rendering of plot

Generate tiles for
(future) delivery
to browser

422

416

NO

User
pans or zooms
?

Assembly tiles in
viewport using tile
generation function

414

418 — YES

A

FIG. 4a

A

↓

Browser sends request
for more tiles — 420

↓

B

FIG.  4b

## FIG. 8

## FIG. 9

1012    1014

1002

254

1004    1010    1001    1006    1008

FIG.    10

Zoom level 0    Zoom level 1    Zoom level 2

1130    1130    1100    1100    1130

1100

1120    1110

1140

1150

FIG.    11